# EUROPEAN PATENT SPECIFICATION

(11) **EP 1 687 162 B1**
(45) Date of publication and mention of the grant of the patent: **04.06.2008**
(21) Application number: 04803335.1
(22) Date of filing: 29.11.2004
(51) Int. Cl.: B60H 1/00

(54) **AIR CONDITIONING ASSEMBLY**
KLIMAANLAGENANORDNUNG
ENSEMBLE DE CONDITIONNEMENT D'AIR

(30) Priority: 28.11.2003 GB 0327709
(43) Date of publication of application: 09.08.2006
(73) Proprietor: Bombardier Transportation GmbH, 10785 Berlin (DE)
(72) Inventor: BOHM, Mats, 393 59 Kalmar (SE)
(74) Representative: Bredema
(86) International application number: PCT/EP2004/013524
(87) International publication number: WO 2005/052459

(56) References cited:
- EP-A- 1 127 767
- EP-A- 1 186 501
- EP-A- 1 300 314
- US-A- 2 211 567
- US-A- 3 343 473
- US-A- 4 935 599
- US-A- 5 389 035

## Description

The invention relates to an air conditioning assembly for a room, in particular for compartments of vehicles such as railway cars, busses and airplanes. The invention further relates to a vehicle compartment comprising the air conditioning assembly according to the invention and to a method for conditioning the air in a vehicle compartment.

US 2 11 567 discloses a rail vehicle compartment with an air inlet unit, local air treatment units, a cooling unit and a cooling circuit for transporting cooling liquid from the cooling unit to the local air treatment units.

In vehicle compartments the air needs to be conditioned by providing fresh air and adjusting it to a desired temperature either by cooling or heating, as the circumstances require. European patent EP-A-1186501 describes an air conditioning assembly wherein the air is heated or cooled centrally over a heat exchanger and transported through air ducts over the length of the vehicle compartment for distribution to a number of local air supplies positioned along the length of the vehicle compartment. The air ducts are hidden in the ceiling of the vehicle compartment. Similarly, in EP-A-1300314 an air conditioning assembly is described where centrally conditioned air is transported through air ducts hidden in the back of seats positioned along the sidewalls of the vehicle compartment.

In the known air conditioning assemblies a large amount of air is treated by a central air-handling unit and is then distributed through ducts along the whole length of the compartment. An important problem of that is that it requires a lot of space for ducting the conditioned air and sometimes also of the return air that needs to be conditioned. Restricted speed in the ducts implies a minimum duct area, causing air ducts to be voluminous. In some types of trains, highspeed trains or double-deckers, it is very difficult to find space for the ducts in the ceiling. In a modem train the space between ceilings and the roof of the compartment is used by many systems. Packing of the roof becomes a compromise between ducts, cables, electrical system etc. Low floor compartments also require that some systems normally placed in the under frame to be moved above the ceiling. Either special, usually expensive solutions must be used, or the height between the roof and the ceiling becomes lower than comfortable.

The centralized air-handling unit requires the return air to be transported long distances through the whole or a large part of the compartment to reach the central air-handling unit. This implies either an undesirable mixing of used return air with the conditioned air or separate ducting for transporting used or polluted air to the central air handling unit.

A further disadvantage is that it is very difficult to change the interior layout of a room or compartment, in particular for providing separate sub compartments where the air is polluted, e.g. pantry or smoking compartments. Polluted air must be prevented from entering the return air intake to avoid the polluted air being distributed by the air conditioning assembly over the complete compartment.

A further disadvantage of the known current system is that it is not possible to control the cooling power locally other than by adjusting the airflow.

There is therefore a need for an improved air conditioning assembly. According to the invention there is provided a rail vehicle compartment according to claim 1.

In the air conditioning assembly according to the invention no ducts for air distribution along the room are required. Instead of using an airduct, the air conditioning assembly according to the invention uses the room as a duct for transporting fresh air from one side of the room to an opposite other side of the room. In a simple embodiment, one inlet unit and one outlet unit are used to create an air flow in the room. Although more inlet and outlet units can be used, they should be placed and have a capacity such as to effect a net air transport from one side to an opposite side in the room. From the air inlet unit the fresh ventilation air flows through the room and passes the local air treatment units where it is mixed with the recirculated air. This means that the total air content in the room flows towards the air outlet unit and is regularly re-conditioned when passing the local air treatment units.

The air conditioning assembly according to the invention is technically less complex and less expensive than the known assemblies. Also the space saved by the absence of air ducts leads to a considerable cost saving in the design of a compartment. Because the assembly is modular it can be installed in virtually all types of vehicles without significant adaptation in design of the vehicle or of the air conditioning assembly. Hence, in manufacturing of the assembly, the size of the series can be increased leading to considerable economic advantage. A further advantage is that the interior of the compartment can easily be changed, for example by introducing separate sub compartments, doors etc. without having to change the lay out of the air conditioning. Yet another advantage of the modular nature is that repairs can be done quick and easily by exchanging a defect unit for a new one and off-site repairing the defect unit.

Because the local air treatment units are small they can easily be integrated in interior components .like a luggage rack, a wall panel or a roof panel. They can be installed wherever needed. They do not have to be evenly distributed over the compartment. It is even possible to install them on only one side of the compartment or in the back of chairs.

The air inlet unit is also provided with a heat exchanger connected to the cooling circuit and with a heating. The air inlet unit can be a separate unit but it can also be integrated in a local air treatment unit. An advantage of the invention is that the air inlet unit handling the outdoor air can be much smaller than in conventional air conditioners and hence can be more easily integrated in the room design and that it is more comfortable to passengers in the room in the vicinity of the air inlet unit. It was found that the carbon dioxide level in the air, as it moves from the inlet to the outlet unit steadily increases but stays within acceptable levels even without further separate fresh air intake. It is however possible to use more than one separate air inlet units or, more preferably, use one or more local air treatment units provided with local fresh air intake means for taking in outside air to mix with the return air. Integration of local fresh air intake in the local air treatment units will also increase freedom in interior layout. It will be possible to have small compartments individually ventilated and tempered by the local air treatment units.

The temperature and the flow ratio of the cooling liquid determines the temperature of the inlet air or the recirculated return air. The cooling liquid flow through each individual heat exchanger can be controlled with a 3-way valve. Capacity control of each unit can also be done with fan speed control. Evidently, in case the temperature of the outside air is lower than that of the cooling liquid, the "cooling" liquid heats the air in the heat exchanger. Optionally, the air conditioning assembly further comprises a heating system to heat the cooling liquid. In this way the same cooling circuit can be used to provide additional heating capacity if needed. The cooling liquid can be heated electrically or with waste heat from propulsion or engine. In case the outside air temperature is lower than desired the air is preferably heated to the desired temperature by separate heating means, in particular in the air inlet unit. In a preferred embodiment, the local air treatment units and/or the air inlet unit are provided with a separate heating system, preferably an electric heating system.

A great advantage of the invention is that the air conditioning can be adjusted locally. Hence the local air treatment units and air inlet unit preferably also comprise control means for adjusting airflow and preferably also the air temperature. The air conditioning assembly also comprises a central control system for centrally adjusting the individual control means of the local air treatment units and air inlet unit. The temperature at each local air treatment unit can be regulated in different ways. The temperature can be regulated by the temperature and flow ratio of the cooling liquid as described above. The temperature can also be adjusted by the airflow through the heat exchanger or the heater. This can be done by adjusting the fan speed, by limiting the air flux at the outlet or by adjusting the mixing ratio of air streams with different temperature. For example, in a local air treatment unit with a fixed or limited air flow rate a valve can be provided to direct only a part of the return air through the heat exchanger and/or heating system, where after it is mixed with the unconditioned air. The mixing ratio is chosen in view of the desired cooling capacity.

The local air treatment unit comprises a return air intake, a heat exchanger and a conditioned air outlet. The return air intake preferably comprises a fan for creating the air flow through the unit. As described above the unit may also comprise a heating system. The unit further may comprise filters for filtering particles and/or a damper for damping sound. In particular in compartments where air is polluted, for example by smoking, the local air treatment unit may be fitted with air cleaning means for reducing the air pollution. It is one of the advantages of the present invention that the assembly can so easily be adapted to provide different functions, heating, cooling, refreshing, cleaning, locally in different zones or sub compartments within one room or vehicle compartment.

At the conditioned air outlet the local air treatment units preferably comprise a diffuser for distributing return air throughout the vehicle compartment. The concept does not rule out any known air distributors or diffusers.

The cooling or heating power is supplied to the local air treatment units by pumping cooling liquid through the heat exchangers. The cooling liquid is for example a water/glycol mix. The cooling liquid is circulated in a cooling circuit from the cooling unit to the heat exchangers and back. The cooling circuit preferably comprises two separate circuits; a cooling liquid input circuit and a separate cooling liquid output circuit, wherein the two or more local air treatment units' heat exchangers are connected in parallel over the cooling liquid input and output circuits. In this way all local air treatment units are fed with essentially the same temperature cooling liquid and have in principle the same cooling power. Cooling/heating capacity can be controlled with a 3-way valve on the cooling circuit controlling the liquid flow through the .heat exchanger.

Standard cooling units can be used for cooling the cooling liquid. The cooling unit comprises an integrated or separate cooling liquid pump. An advantage of the air conditioning assembly according to the invention is that the cooling unit can easily be placed entirely outside the compartment, which again saves space and allows more freedom in design of the cooling unit. The known air conditioning assemblies have one cooling unit per car compartment. With the air conditioning assembly according to the invention, one cooling unit could supply more than one car because the only thing that is required is to connect the cooling circuits of the cars. Due to the presence of a cooling circuit along the compartment, it is also possible to use more than one but smaller cooling unit, in series in the cooling circuit, hence making it easier to standardize the AC unit and increase production series and economy of scale to reduce the prize. Further, it is easier to integrate the smaller cooling units in the limited available space in and on the vehicle compartment. For example basic low capacity units, e.g. 5 kW units, can be used in a number necessary to reach required capacity.

As described above the assembly is particularly advantageous in vehicle compartments having the problem of limited available space, in particular in passenger compartments of trains. Hence, the invention relates to a rail vehicle compartment, provided with an air conditioning assembly according to the invention. The vehicle compartment has a very good air conditioning quality, with improved control and comfort for passengers and with improved flexibility of design due to reduced space requirements.

For an optimal distribution of the recirculated return air, the at least two local air treatment units are preferably provided in the ceiling of the vehicle compartment. The advantages of the present inventions are particularly manifest in a vehicle compartment provided with two or more separate sub compartments, each comprising one or more local air treatment units.

The air conditioning assembly according to the invention will now be described, by way of example only, with reference to the accompanying drawings, in which:
Figure 1 is a side view of a rail vehicle compartment having a typical prior art air conditioning assembly;
Figure 2 is a side view of a rail vehicle compartment having an air conditioning assembly according to the invention;
Figure 3 is a schematic representation of a local air treatment unit connected to the cooling circuit;
Figure 4 is a side view of a local air treatment unit;
Figure 5 is a top view of side view in the length direction of a vehicle compartment comprising an air conditioning assembly according to the invention, showing the local air treatment units and the cooling circuit.
Figure 6 is a side view in the transverse direction of a vehicle compartment showing the local air treatment units mounted between the ceiling and the roof of the compartment.

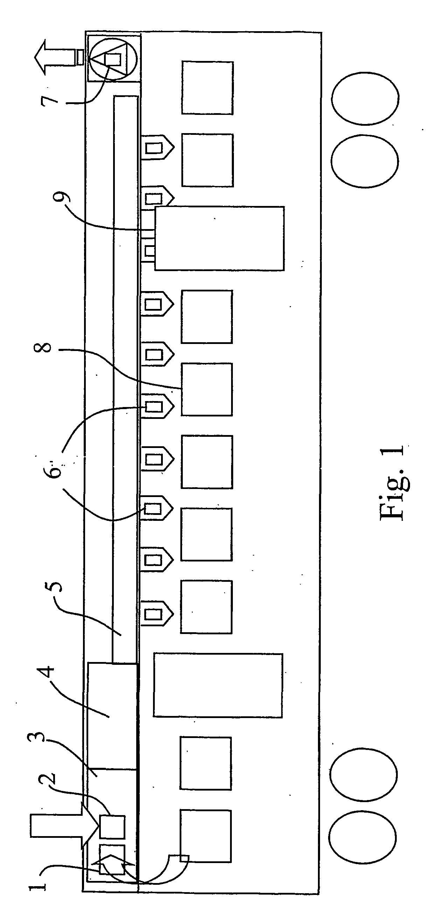

Figure 1 shows a side view of a rail vehicle compartment having a typical prior art air conditioning assembly. The contours of the vehicle compartment, including the wheels, windows and doors, are given in dotted lines. On one side of the vehicle compartment the ventilation unit (3) takes in return air (1) from the compartment and fresh ventilation air (2) from outside, mixed together and fed through the air conditioning unit (4). The conditioned air is then transported through an air distribution duct (5) and diffused into the vehicle compartment at various diffuser points (6). The conditioned air from the diffuser points (6) mixes with the air in the compartment. Part of the air inside the compartment is discharged through the exhaust air outlet unit (7). Another part of the air in the vehicle compartment (8) is transported in the other direction towards the return air inlet (1).

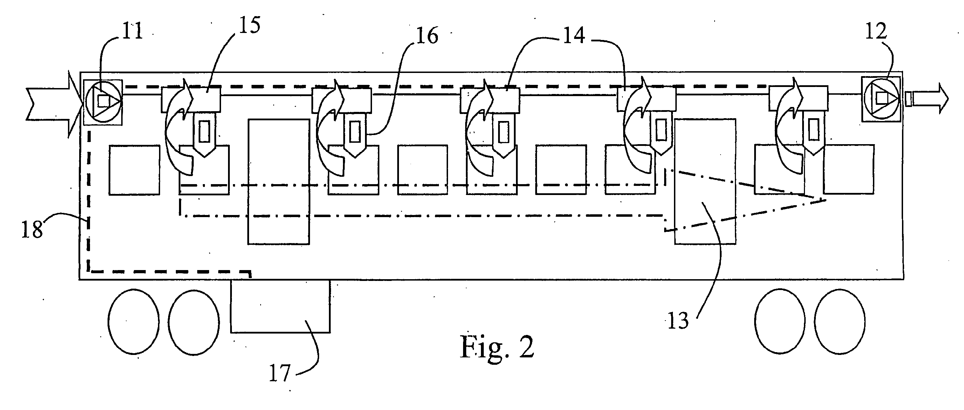

Figure 2 shows a side view of a rail vehicle compartment having an air conditioning assembly according to the invention. The air conditioning assembly comprises an air inlet unit (11), which takes in fresh air from outside the compartment, and an exhaust air outlet unit (12) for discharging used air. The air inlet and air outlet units create airflow within the compartment (13). At five positions between the air inlet and the air outlet units, local air treatment units (14) are placed, comprising a return air intake unit (15), a heat exchanger and a conditioned air outlet (16). The five local air treatment units (14) are connected to the cooling unit (17) by a cooling circuit (18). The air conditioning assembly according to the invention does not need air ducts for transporting conditioned air or recirculated return air, is more compact allowing design flexibility, is .less expensive, provides more comfort to passengers by allowing better local adjustment of conditioning parameters, is easier in maintenance and provides a more efficient removal of used air.

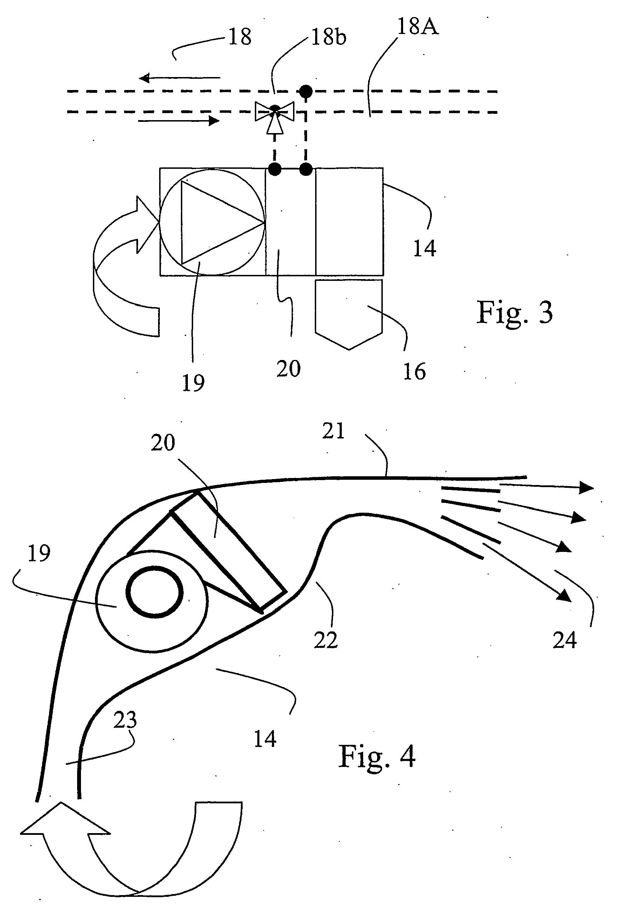

Figure 3 is a schematic representation of a local air treatment unit (14) connected to the cooling circuit (18). The local air treatment unit comprises a fan (19) that takes in return air from the compartment and forces the return air through the heat exchanger (20) and out through the conditioned air outlet - (16). The cooling circuit (18) comprises a separate circuit (18a) to feed cooling liquid to the heat exchanger, and a separate cooling circuit (18b) to return the cooling liquid to the cooling unit (17).

Figure 4 is a side view of a local air treatment unit (14) that is integrated between the roof of the vehicle compartment (21)_and the ceiling of the vehicle compartment (22). An opening (23) is provided in the ceiling for taking in return air from the vehicle compartment, which is then led over a heat exchanger (20) and returned into the vehicle compartment through a diffuser (24).

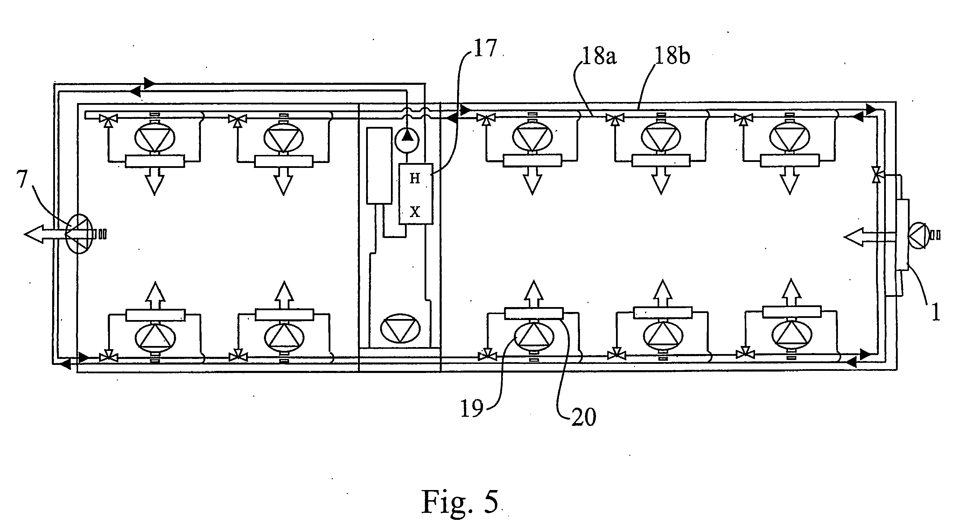

Figure 5 shows a top view of a vehicle compartment comprising an air conditioning assembly according to the invention and showing details of the cooling circuit (18) and the connection of the various local air treatment units (14) to the cooling circuit. The units are connected in parallel over the dual cooling circuit.

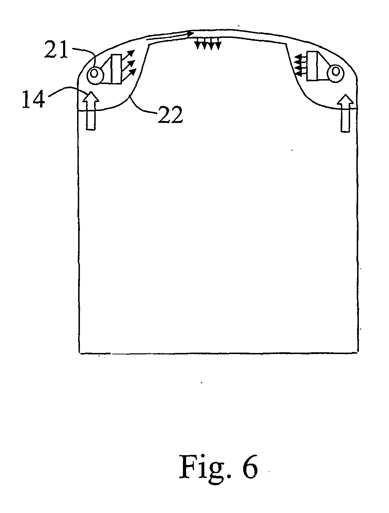

Figure 6 shows a side view in the transverse direction of a vehicle compartment showing the local air treatment units (14) mounted between the compartment roof (21) and the compartment ceiling (22).

The capacity of the individual local air treatment units is relatively small compared to the air conditioning systems of the prior art. The total cooling capacity can be adjusted by appropriate choice of the number of local air treatment units. The cooling capacity per local air treatment unit is typically in the range between 0.5 and 15 kW, preferably 5 to 10 kW, whereas the air flow rate per unit is in the range between 100 and 1000 m³/h. Typically, the local units are designed to effect a temperature reduction of between 10° and 20° C at an air flow rate per unit of between 300 and 500 m³/h. For a local air treatment unit having an air flow capacity of 400 m³/h and a cooling capacity of 2 kW, approximately ten units suffice to provide sufficient total cooling capacity to a train compartment of about 200 m³ size, suitable for transporting 60 passengers. The temperature of the cooling liquid is preferably between 0° and 10° C.

The air inlet unit preferably has a relatively high capacity in cooling and in particular in heating. The capacity of the air inlet unit is chosen so as to be able to heat or cool the external fresh air to a realistic inlet temperature, and the heating capacity is preferably between 10 and 20 kW. The airflow capacity is preferably in the range of 200 to 1000, preferably 400 to 800 m³/h. The cooling capacity is preferably between 1 and 15 kW, preferably between 5 to 10 kW, depending on the prevailing external temperature. With these capacities, temperature reductions of between 10° and 20° C can be effected, as well as temperature increases in the range of 30° to 60° C.

## Claims

1. Rail vehicle compartment (13) having a longitudinal dimension and provided with an air conditioning assembly, comprising:
- at least one air inlet unit (11) at one longitudinal end of the vehicle compartment for taking fresh air from outside into the vehicle compartment and at least one air outlet unit (12) at the opposite longitudinal end of the vehicle compartment for discharging used air and for creating an air stream in the compartment between the air inlet and air outlet units, wherein the air inlet unit comprises a fresh air intake, a heat exchanger and a conditioned fresh air outlet;
- two or more local air treatment units (14) located at positions between the air inlet and air outlet units, each local air treatment unit comprising a return air intake (15), a heat exchanger (20) and a conditioned air outlet (16) for locally reconditioning the air which flows from the air inlet to the air outlet units and passes the local air treatment units;
- a cooling unit (17) for cooling a cooling liquid; and
- a cooling circuit for transporting cooling liquid from the cooling unit to the heat exchangers of the inlet unit and of the two or more local air treatment unit,
wherein the local air treatment units and air inlet unit comprise control means for adjusting air flow and air temperature and the assembly further comprises a central control system for adjusting the control means of the local air treatment units and air inlet unit, so that the air conditioning can be adjusted locally.

2. Rail vehicle compartment according to claim 1, wherein the local air treatment units are provided with local fresh air intake means for taking in outside air to mix with the return air.

3. Rail vehicle compartment according to any preceding claim, wherein the local air treatment units and/or of the air inlet unit are provided with a heating system.

4. Rail vehicle compartment according to any preceding claim, further comprising a heating system to heat the cooling liquid for using the cooling circuit for heating;

5. Rail vehicle compartment according to any preceding claim wherein the local air treatment units further comprise a fan for forcing an air flow through the heat exchanger and control means for controlling the air flow rate and/or air temperature.

6. Rail vehicle compartment according to claim 5, wherein the control means include means for controlling cooling liquid flow through the heat exchanger, electrical fan speed control, an air flow by-pass valve and/or an air flow limiter.

7. Rail vehicle compartment according to any preceding claim, wherein the local air treatment units further comprise filters for filtering particles, cleaning means for cleaning polluted air and/or a damper for damping sound.

8. Rail vehicle compartment according to any preceding claim, wherein the local air treatment units comprise, at the conditioned air outlet, a diffuser for distributing conditioned return air throughout the vehicle compartment.

9. Rail vehicle compartment according to any preceding claim, wherein the cooling circuit comprises a cooling liquid input circuit and a cooling liquid output circuit and wherein the two or more local air treatment units' heat exchangers are connected in parallel over the cooling liquid input and output circuits.

10. Rail vehicle compartment according to any preceding claim , wherein the cooling liquid is a water/glycol mix.

11. Rail vehicle compartment according to any preceding claim, wherein the at least two local air treatment units are provided in the ceiling of the vehicle compartment.

12. Rail vehicle compartment according to any preceding claim provided with two or more separate sub-compartments, each comprising one or more local air treatment units.

13. Rail vehicle compartment according to any preceding claim, wherein the cooling unit is mounted outside the vehicle compartment.

14. Rail vehicle compartment according to any preceding claim, comprising two or more cooling units connected in series in the cooling circuit.

## Patentansprüche

1. Schienenfahrzeuginnenraum (13), der eine längliche Dimension hat und mit einer Klimaanlagenanordnung versehen ist, die Folgendes umfasst:
- wenigstens eine Lufteinlasseinheit (11) an einem Längsende des Fahrzeuginnenraums zum Eintragen von Frischluft von außen in den Fahrzeuginnenraum und wenigstens eine Luftauslasseinheit (12) am entgegengesetzten Längsende des Fahrzeuginnenraums zum Ablassen von verbrauchter Luft und zum Erzeugen einer Luftströmung im Innenraum zwischen den Lufteinlass- und der Luftauslasseinheiten, wobei die Lufteinlasseinheit einen Frischlufteinlass, einen Wärmetauscher und einen Auslass für aufbereitete Frischluft umfasst;
- zwei oder mehr lokale Luftaufbereitungseinheiten (14), die sich an Positionen zwischen der Lufteinlass- und der Luftauslasseinheit befinden, wobei jede lokale Luftbehandlungseinheit einen Ablufteinlass (15), einen Wärmetauscher (20) und einen Auslass für aufbereitete Luft (16) zum lokalen Wiederaufbereiten von Luft umfasst, die von den Lufteinlass- zu den Luftauslasseinheiten strömt und die lokalen Luftaufbereitungseinheiten durchströmt;
- eine Kühleinheit (17) zum Kühlen einer Kühlflüssigkeit und
- einen Kühlungskreislauf zum Transportieren von Kühlflüssigkeit von der Kühleinheit zu den Wärmetauschern der Einlasseinheit und der zwei oder mehr lokalen Luftaufbereitungseinheiten,
wobei die lokalen Luftaufbereitungseinheiten und die Lufteinlasseinheit Steuermittel zum Einstellen von Luftströmung und Lufttemperatur aufweisen und die Anordnung ferner ein zentrales Steuersystem zum Einstellen der Steuermittel der lokalen Luftaufbereitungseinheiten und der Lufteinlasseinheit aufweist, so dass die Klimatisierung lokal eingestellt werden kann.

2. Schienenfahrzeuginnenraum nach Anspruch 1, bei dem die lokalen Luftaufbereitungseinheiten mit lokalen Frischlufteinlassmitteln zum Eintragen von Außenluft zum Vermischen mit der Abluft versehen sind.

3. Schienenfahrzeuginnenraum nach einem der vorhergehenden Ansprüche, bei dem die lokalen Luftaufbereitungseinheiten und/oder die Lufteinlasseinheit mit einer Heizungssystem versehen sind.

4. Schienenfahrzeuginnenraum nach einem der vorhergehenden Ansprüche, ferner umfassend ein Heizungssystem zum Erhitzen der Kühlflüssigkeit, um den Kühlungskreislauf zum Heizen zu verwenden.

5. Schienenfahrzeuginnenraum nach einem der vorhergehenden Ansprüche, bei dem die lokalen Luftaufbereitungseinheiten ferner einen Lüfter zum Vorgeben einer Luftströmung durch den Wärmetauscher und Steuermitteln zum Steuern des Luftdurchsatzes und/oder der Lufttemperatur aufweisen.

6. Schienenfahrzeuginnenraum nach Anspruch 5, bei dem die Steuermittel Mittel zum Steuern des Kühlflüssigkeitsflusses durch den Wärmeaustauscher, elektrische Lüfterdrehzahlregelung, ein Luftstrom-Bypassventil und/oder einen Luftstrombegrenzer aufweisen.

7. Schienenfahrzeuginnenraum nach einem der vorhergehenden Ansprüche, bei dem die lokalen Luftaufbereitungseinheiten ferner Filter zur Partikelfiltration, Säuberungsmittel zum Reinigen verschmutzter Luft und/oder einen Dämpfer zur Schalldämmung aufweisen.

8. Schienenfahrzeuginnenraum nach einem der vorhergehenden Ansprüche, bei dem die lokalen Luftaufbereitungseinheiten am Auslass für aufbereitete Luft einen Diffusor zum Verteilen von aufbereiteter Abluft im ganzen Fahrzeuginnenraum aufweisen.

9. Schienenfahrzeuginnenraum nach einem der vorhergehenden Ansprüche, bei dem der Kühlungskreislauf einen Kühlflüssigkeitseingangskreislauf und einen Kühlflüssigkeitsausgangskreislauf umfasst und bei dem die Wärmetauscher der zwei oder mehr lokalen Luftaufbereitungseinheiten über den Kühlungsflüssigkeitseingangs- und den Kühlungsflüssigkeitsausgangskreisläufen parallel geschaltet sind.

10. Schienenfahrzeuginnenraum nach einem der vorhergehenden Ansprüche, bei dem die Kühlflüssigkeit ein Wasser-Glykol-Gemisch ist.

11. Schienenfahrzeuginnenraum nach einem der vorhergehenden Ansprüche, bei dem die wenigstens zwei lokalen Luftaufbereitungseinheiten in der Decke des Fahrzeuginnenraums angeordnet sind.

12. Schienenfahrzeuginnenraum nach einem der vorhergehenden Ansprüche, der mit zwei oder mehr separaten Unter-Abteilen versehen ist, die jeweils wenigstens eine lokale Luftbehandlungseinheit aufweisen.

13. Schienenfahrzeuginnenraum nach einem der vorhergehenden Ansprüche, bei dem die Kühlungseinheit außerhalb des Fahrzeuginnenraums montiert ist.

14. Schienenfahrzeuginnenraum nach einem der vorhergehenden Ansprüche, umfassend zwei oder mehr Kühlungseinheiten, die im Kühlungskreislauf in Reihe geschaltet sind.

## Revendications

1. Compartiment de véhicule ferroviaire (13) ayant une dimension longitudinale et équipé d'un ensemble de conditionnement d'air, comprenant :
- au moins une unité d'entrée d'air (11) au niveau d'une extrémité longitudinale du compartiment du véhicule permettant de prendre de l'air frais à l'extérieur et de l'introduire dans le compartiment du véhicule et au moins une unité de sortie d'air (12) au niveau de l'extrémité longitudinale opposée du compartiment du véhicule permettant de refouler l'air usagé et de créer un courant d'air dans le compartiment entre les unités d'entrée d'air et de sortie d'air, dans lequel l'unité d'entrée d'air comprend une entrée d'air frais, un échangeur de chaleur et une sortie d'air frais conditionné ;
- deux unités de traitement de l'air local ou plus (14) situées en des positions entre les unités d'entrée d'air et de sortie d'air, chaque unité de traitement d'air local comprenant une entrée d'air repris (15), un échangeur de chaleur (20) et une sortie d'air conditionné (16) permettant de reconditionner localement l'air qui s'écoule à partir de l'unité d'entrée d'air jusqu'à l'unité de sortie d'air et traverse les unités de traitement d'air local ;
- une unité de refroidissement (17) permettant de refroidir un liquide de refroidissement ; et
- un circuit de refroidissement permettant de transporter le liquide de refroidissement à partir de l'unité de refroidissement jusqu'aux échangeurs de chaleur de l'unité d'entrée et des deux unités de traitement d'air local ou plus,
dans lequel les unités de traitement d'air local et l'unité d'entrée d'air comprennent des moyens de commande permettant d'ajuster l'écoulement d'air et la température de l'air et l'ensemble comprend en outre un système de commande central permettant d'ajuster les moyens de commande des unités de traitement d'air local et de l'unité d'entrée d'air, de telle sorte que le conditionnement d'air peut être ajusté localement.

2. Compartiment de véhicule ferroviaire selon la revendication 1, dans lequel les unités de traitement d'air local sont dotées des moyens d'entrée d'air frais local permettant de prendre de l'air extérieur pour le mélanger à l'air repris.

3. Compartiment de véhicule ferroviaire selon l'une quelconque des revendications précédentes, dans lequel les unités de traitement d'air local et/ou l'unité d'entrée d'air sont dotées d'un système de chauffage.

4. Compartiment de véhicule ferroviaire selon l'une quelconque des revendications précédentes, comprenant en outre un système de chauffage permettant de chauffer le liquide de refroidissement pour utiliser le circuit de refroidissement pour le chauffage.

5. Compartiment de véhicule ferroviaire selon l'une quelconque des revendications précédentes, dans lequel les unités de traitement d'air local comprennent en outre un ventilateur permettant de forcer un écoulement d'air à travers l'échangeur de chaleur et des moyens de commande pour commander le débit de l'air et/ou la température de l'air.

6. Compartiment de véhicule ferroviaire selon la revendication 5, dans lequel les moyens de commande comportent des moyens permettant de commander l'écoulement de liquide de refroidissement à travers l'échangeur de chaleur, la commande de la vitesse du ventilateur électrique, une soupape de dérivation d'écoulement d'air et/ou un limiteur d'écoulement d'air.

7. Compartiment de véhicule ferroviaire selon l'une quelconque des revendications précédentes, dans lequel les unités de traitement d'air local comprennent en outre des filtres permettant de filtrer des particules, des moyens de nettoyage permettant de nettoyer l'air pollué et/ou un amortisseur permettant d'amortir les sons.

8. Compartiment de véhicule ferroviaire selon l'une quelconque des revendications précédentes, dans lequel les unités de traitement d'air local comprennent, au niveau de la sortie d'air conditionné, un diffuseur permettant de distribuer l'air repris conditionné dans tout le compartiment de véhicule.

9. Compartiment de véhicule ferroviaire selon l'une quelconque des revendications précédentes, dans lequel le circuit de refroidissement comprend un circuit d'entrée de liquide de refroidissement et un circuit de sortie de liquide de refroidissement et dans lequel les échangeurs de chaleur des deux unités de traitement d'air local ou plus sont raccordés en parallèle au-dessus des circuits d'entrée et de sortie de liquide de refroidissement.

10. Compartiment de véhicule ferroviaire selon l'une quelconque des revendications précédentes, dans lequel le liquide de refroidissement est un mélange d'eau/glycol.

11. Compartiment de véhicule ferroviaire selon l'une quelconque des revendications précédentes, dans lequel les au moins deux unités de traitement d'air local sont prévues dans le plafond du compartiment du véhicule.

12. Compartiment de véhicule ferroviaire selon l'une quelconque des revendications précédentes, doté de deux sous-compartiments séparés ou plus, chacun comprenant une ou plusieurs unités de traitement d'air local.

13. Compartiment de véhicule ferroviaire selon l'une quelconque des revendications précédentes, dans lequel l'unité de refroidissement est montée à l'extérieur du compartiment du véhicule.

14. Compartiment de véhicule ferroviaire selon l'une quelconque des revendications précédentes, comprenant deux unités de refroidissement ou plus raccordées en série dans le circuit de refroidissement.
